# EUROPÄISCHE PATENTSCHRIFT

(11) **EP 1 336 099 B1**
(45) Veröffentlichungstag und Bekanntmachung des Hinweises auf die Patenterteilung: **27.01.2010**
(21) Anmeldenummer: 01988012.9
(22) Anmeldetag: 13.11.2001
(51) Int. Cl.: G01N 27/406

(54) **HEIZEINRICHTUNG und Gasmessfühler mit einer Heizeinrichtung**
HEATING DEVICE and gas sensor comprising a heating device
DISPOSITIF DE CHAUFFAGE et capteur de gaz comprenant un dispositif de chauffage

(30) Priorität: 25.11.2000 DE 10058643
(43) Veröffentlichungstag der Anmeldung: 20.08.2003
(73) Patentinhaber: ROBERT BOSCH GMBH, 70442 Stuttgart (DE)
(72) Erfinder: HEIMANN, Detlef, 70839 Gerlingen (DE); HANDLER, Torsten, 70435 Stuttgart (DE); DIEHL, Lothar, 70499 Stuttgart (DE); LINDAUER, Dieter, 75417 Muehlacker (DE); SEIZINGER, Dietmar, 71665 Vaihingen/Enz 6 (DE)
(86) Internationale Anmeldenummer: PCT/DE2001/004252
(87) Internationale Veröffentlichungsnummer: WO 2002/044701

(56) Entgegenhaltungen:
- EP-A- 0 281 378
- DE-A- 4 343 089
- DE-A- 19 834 276
- DE-A- 19 857 470

## Beschreibung

### Stand der Technik

Die Erfindung geht aus von einer Heizeinrichtung nach dem Oberbegriff des unabhängigen Anspruchs.

Eine derartige Heizeinrichtung ist beispielsweise aus der DE 198 34 276 A1 zur Beheizung eines Sensorelements bekannt, das in einem Gasmessfühler zur Abgasanalyse bei Verbrennungsmotoren eingesetzt wird. Das Sensorelement weist Festelektrolytschichten und Elektroden sowie eine schichtförmig aufgebaute Heizeinrichtung auf. Die Heizeinrichtung ist auf einer Festelektrolytschicht oder zwischen einer Festelektrolytschicht und einer weiteren Festelektrolytschicht angeordnet. Die Heizeinrichtung beinhaltet ein Heizelement, beispielsweise aus einer elektrischen Widerstandsschicht, sowie eine Isolierung, in die das Heizelement eingebettet ist. Die Isolierung weist eine einheitliche Materialzusammensetzung und eine einheitliche Struktur, insbesondere bezüglich des Porenanteils auf. Durch die Isolierung soll das Heizelement gegen die Festelektrolytschichten und die Elektroden elektrisch, also sowohl bezüglich Elektronen- als auch Ionenleitung, isoliert werden, so dass durch den Betrieb der Heizeinrichtung die Funktion des Sensorelements nicht beeinträchtigt wird.

Die Heizeinrichtung wird herstellt, indem auf eine sogenannte Grünfolie, also eine ungesinterte keramische Folie, in Dünn- oder Dickschichttechnik eine untere Schicht der Isolierung, das Heizelement und eine obere Schicht der Isolierung aufgebracht werden. Anschließend wird die mit der Heizeinrichtung bedruckte Grünfolie mit anderen Grünfolien, auf die beispielsweise Elektroden gedruckt sein können, zusammenlaminiert und gesintert.

Die Isolierung ist häufig porös ausgebildet. Der Porenanteil der Isolierung wird durch die Zugabe eines Porenbildners vor dem Sintern erreicht. Beim Sintern verbrennt der Porenbildner, so dass eine poröse Struktur entsteht. Durch die zugegebene Menge des Porenbildners, beispielsweise Glaskohle, wird der Porenanteil eingestellt.

Bei einer Isolierung mit höherem Porenanteil ist nachteilig, dass im Betrieb Leckströme auftreten können. Diese Leckströme entstehen durch Verunreinigungen innerhalb der Isolierung, beispielsweise durch das Abdampfen einer metallischen Komponente des Heizelements, beispielsweise von Platin, oder durch Feuchtigkeit in der Heizeinrichtung. Je höher der Porenanteil der Isolierung ist, desto besser können Verunreinigungen die Isolierung durchdringen und sich in den Poren der Isolierung ablagern, und desto höher ist der Leckstrom.

Bei einer Isolierung mit einem geringeren Porenanteil ist hingegen nachteilig, dass die Elastizität einer Isolierung mit abnehmendem Porenanteil abnimmt und somit die Rissanfälligkeit zunimmt. Hierdurch kann es im Betrieb zu einer Unterbrechung des Heizelements kommen. Die Gefahr einer Rissbildung ist auch dann gegeben, wenn Feuchtigkeit beispielsweise über eine Kontaktierung des Heizelements in die Heizeinrichtung eindringt. Je geringer der Porenanteil der Isolierung ist, desto weniger Volumen steht zur Verfügung, in dem das beim Aufheizen entstehende Gas aufgenommen werden könnte, und desto größer ist die Rissanfälligkeit.

Bei den bekannten Heizeinrichtungen mit nur einer Isolierung mit einheitlichem Porenanteil treten also entweder die geschilderten Nachteile einer Isolierung mit höherem Porenanteil oder die Nachteile einer Isolierung mit geringerem Porenanteil auf.

Aus der Druckschrift DE 43 43 089 A1 ist eine Heizeinrichtung bekannt, bei der ein Heizleiter in eine Isolationsschicht eingebettet ist. Auf beiden Seiten der Isolationsschicht ist ein Hohlraum vorgesehen.

Die Druckschrift DE 198 34 276 A1 beschreibt eine Heizeinrichtung, bei der ein Heizleiter wiederum in eine poröse Isolationsschicht aus Aluminiumoxid eingebettet ist. Die Isolationsschicht ist zwischen zwei Substratfolien aus Zirkonoxid angeordnet.

In der Druckschrift EP 0 281378 A2 ist eine Heizeinrichtung beschrieben, bei der ein Heizleiter in eine hochdichte Isolationsschicht aus Zirkonoxid eingebettet ist. An die hochdichte Isolationsschicht schließt sich eine weitere Isolationsschicht aus Aluminiumoxid an, die porös ausgebildet ist.

### Vorteile der Erfindung

Die erfindungsgemäße Heizeinrichtung mit den kennzeichnenden Merkmalen des unabhängigen Anspruchs hat demgegenüber den Vorteil, dass zum einen Leckströme zwischen dem Heizelement und den Elektroden weitgehend verhindert werden und dass zum anderen die Gefahr von Rissen im Heizelement stark verringert wird.

Ist das Heizelement von einer ersten und einer zweiten Isolierung mit unterschiedlichem Porenanteil umgeben, so wird durch die Isolierung mit dem höheren Porenanteil und damit der höheren Elastizität die Gefahr der Rissbildung vermindert, während durch die Isolierung mit dem geringeren Porenanteil Leckströme stark reduziert werden.

Ist das Heizelement in eine erste Isolierung eingebettet, die einen höheren Porenanteil aufweist als eine zweite, die erste Isolierung umgebende Isolierung, so wird die Bildung von Rissen besonders wirkungsvoll verhindert, wenn Feuchtigkeit beispielsweise über eine Kontaktierung in das Heizelement der Heizeinrichtung eindringen kann.

Durch die in den abhängigen Ansprüchen aufgeführten Maßnahmen sind vorteilhafte Weiterbildungen der im unabhängigen Anspruch angegebenen Heizeinrichtung möglich.

Besonders vorteilhaft ist es, für die erste Isolierung eine offene Porosität vorzusehen. Bei einer sogenannten offenen Porosität sind die Poren miteinander verbunden, so dass eine Isolierung mit offener Porosität gasdurchlässig ist. Bei einer ersten Isolierung mit offener Porosität wird eine Rissbildung auch dann verhindert, wenn größere Feuchtigkeitsmengen in die Heizeinrichtung eindringen. Da die Poren nämlich untereinander verbunden sind, können sie eine größere Menge der verdampfenden Flüssigkeit aufnehmen.

Besonders vorteilhaft ist weiterhin, wenn für die zweite Isolierung eine geschlossene Porosität vorgesehen ist. Bei einer geschlossenen Porosität sind die Poren geschlossen, das heißt zumindest über größere Bereiche nicht miteinander verbunden. Eine Isolierung mit geschlossener Porosität ist dementsprechend gasdicht. Bei einer zweiten Isolierung mit geschlossener Porosität wird verhindert, dass Verunreinigungen in die zweite Isolierung eindringen, so dass der Leckstrom besonders effektiv vermindert wird.

### Zeichnung

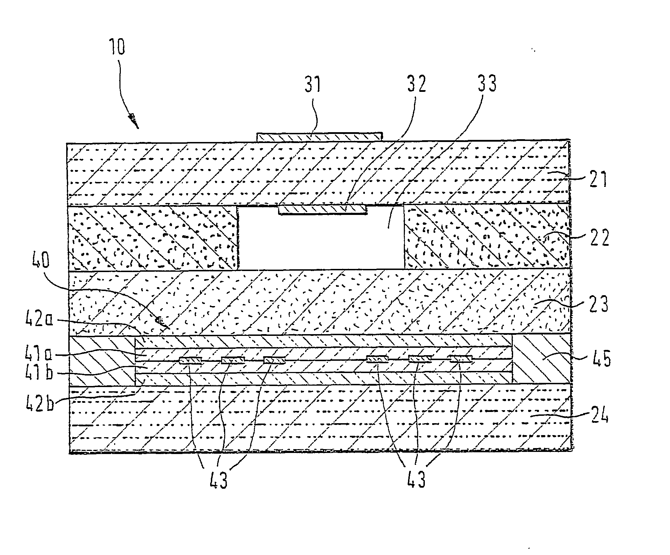

Ein Ausführungsbeispiel der Erfindung ist in der Zeichnung dargestellt und in der nachfolgenden Beschreibung erläutert. Die einzige Figur zeigt einen Querschnitt eines Ausführungsbeispiels eines planaren Sensorelements mit einer erfindungsgemäßen Heizeinrichtung.

### Beschreibung des Ausführungsbeispiels

Die Figur zeigt als Ausführungsbeispiel der Erfindung ein planares, schichtförmig aufgebautes Sensorelement 10 mit einer ersten, zweiten, dritten und vierten Festelektrolytschicht 21, 22, 23, 24 aus einem ionenleitenden Material. Auf der ersten Festelektrolytschicht 21 ist eine erste Elektrode 31 angeordnet, die einem Messgas ausgesetzt ist. Weiterhin ist auf der ersten Festelektrolytschicht 21 auf der der ersten Elektrode 31 abgewandten Seite eine zweite Elektrode 32 angeordnet, die einem Referenzgas in einem Referenzgaskanal 33 ausgesetzt ist. Der Referenzgaskanal 33 ist in die zweite Festelektrolytschicht 22 eingebracht und steht mit einer außerhalb des Sensorelements 10 gelegenen Referenzgasatmosphäre in Verbindung (nicht dargestellt).

Die erste und die zweite Elektrode 31, 32 sowie die erste Festelektrolytschicht 21 bilden eine elektrochemische Zelle, die beispielsweise potentiometrisch betrieben wird. Bei unterschiedlichem Sauerstoffpartialdruck von Messgas und Referenzgas liegt zwischen der ersten und der zweiten Elektrode 31, 32 die sogenannte Nernstspannung an, mit der der Sauerstoffpartialdruck im Messgas bestimmt werden kann.

Da die Ionenleitfähigkeit des Festelektrolyten temperaturabhängig ist, ist es erforderlich, das Sensorelement 10 auf eine gleichmäßige Temperatur aufzuheizen. Hierzu ist zwischen der dritten und der vierten Festelektrolytschicht 23, 24 eine Heizeinrichtung 40 vorgesehen, die seitlich von einem Dichtrahmen 45 umgeben ist.

Die Heizeinrichtung 40 weist ein Heizelement 43 auf, das aus einer Platin enthaltenden Widerstandsschicht besteht. Das Heizelement 43 ist zwischen einer oberen und einer unteren Schicht 41a, 41b einer ersten Isolierung 41 eingebettet. Die Isolierung 41 mit dem Heizelement 43 ist zwischen einer oberen und einer unteren Schicht 42a, 42b einer zweiten Isolierung 42 angeordnet. Die erste und die zweite Isolierung 41, 42 enthalten als wesentlichen Bestandteil Al₂O₃. Die Herstellung derartiger Isolierungen ist dem Fachmann allgemein bekannt und wird nicht im Detail dargestellt.

In einer ersten Ausführungsform des Ausführungsbeispiels weist die erste Isolierung 41 eine Porenanteil von 8 Vol.-% und die zweite Isolierung 42 einen Porenanteil von 3 Vol.-%, jeweils nach dem Sinterprozess, auf. Hierzu wird der ersten Isolierung 41 ein Anteil von 5 Gew.-% Porenbildner bezogen auf den Al₂O₃-Anteil im ungesinterten Zustand und der zweiten Isolierung 42 ein Anteil von 2 Gew.-% Porenbildner, ebenfalls bezogen auf den Al₂O₃-Anteil im ungesinterten Zustand, zugesetzt.

Die für einen bestimmten Porenanteil in der gesinterten Isolierung 41, 42 erforderliche Menge an Porenbildner kann abhängig von der Führung des Sinterprozesses, der Körnung und der chemischen Zusammensetzung der zu sinternden Schichten variieren. Für eine gegebene Kombination von Ausgangsgrößen ist es jedoch ohne Schwierigkeiten möglich, einen geeigneten Anteil an Porenbildner experimentell zu ermitteln.

Als Porenbildner wird Kohlenstoff verwendet. Als besonders geeignet hat sich Flammruß 101 der Firma Degussa erwiesen, da er besonders feine und gleichmäßige Partikel enthält. Die mittlere Teilchengröße des Porenbildners kann beispielsweise im Bereich von 0,01 bis 1 µm liegen.

Je nach Anwendungsgebiet können auch andere Porenanteile gewählt werden. So kann bei einer erhöhten Rissanfälligkeit für die Isolierungen 41, 42 ein höherer Porenanteil gewählt werden. Bei Anwendungen, bei denen ein besonders niedriger Leckstrom erforderlich ist, kann dementsprechend für die Isolierungen 41, 42 ein niedrigerer Porenanteil gewählt werden. Allgemein hat sich für die erste Isolierung 41 ein Porenanteil von 5 bis 16 Vol.-% und für die zweite Isolierung 42 ein Porenanteil von 1,5 bis 5 Voll-% als geeignet erwiesen. Dies entspricht in der ersten Isolierung 41 einem Porenbildneranteil von 3 bis 10 Gew.-% bezogen auf den Al2O3-Anteil im ungesinterten Zustand und in der zweiten Isolierung 42 einem Porenbildneranteil von 1 bis 3 Gew.-%, ebenfalls bezogen auf den Al203-Anteil im ungesinterten Zustand.

Bei einem weiteren, nicht dargestellten Ausführungsbeispiel ist das Heizelement sowie die erste und die zweite Isolierung zumindest bereichsweise von mindestens einer weiteren Isolierung umgeben, deren Porenanteil sich von dem Porenanteil der zweiten Isolierung unterscheidet. Der Porenanteil der weiteren Isolierung kann beispielsweise dem Porenanteil der ersten Isolierung entsprechen.

Die erfindungsgemäße Heizeinrichtung läßt sich selbstverständlich auch auf andere Sensortypen, beispielsweise eine Breitband-λ-Sonde, übertragen.

## Patentansprüche

1. Heizeinrichtung für einen Gasmessfühler, insbesondere zum Einsatz in der Abgasanalyse von Verbrennungsmotoren, mit einem eine elektrische Widerstandsschicht aufweisenden Heizelement, das elektrisch isoliert ist, wobei das Heizelement (43) in eine erste Isolierung (41) eingebettet ist, die ihrerseits zumindest bereichsweise von einer zweiten Isolierung (42) umgeben ist, **dadurch gekennzeichnet, dass** die erste Isolierung (41) und die zweite Isolierung (42) Al₂O₃ aufweisen und dass die erste Isolierung (41) einen höheren Porenanteil als die zweite Isolierung (42) aufweist.

2. Heizeinrichtung nach Anspruch 1, **dadurch gekennzeichnet, dass** die erste Isolierung (41) eine offene Porosität aufweist.

3. Heizeinrichtung nach Anspruch 1, **dadurch gekennzeichnet, dass** die zweite Isolierung (42) eine geschlossene Porosität aufweist.

4. Heizeinrichtung nach Anspruch 1, **dadurch gekennzeichnet, dass** die erste Isolierung (41) im gesinterten zustand einen Porenanteil von 5 bis 16 Vol.-%, vorzugsweise 8 Vol.-% aufweist.

5. Heizeinrichtung nach Anspruch 1, **dadurch gekennzeichnet, dass** die zweite Isolierung (42) im gesinterten zustand einen Porenanteil von 1,5 bis 5 Vol.-%, vorzugsweise 3 Vol.-% aufweist.

6. Heizeinrichtung nach Anspruch 2, **dadurch gekennzeichnet, dass** die zweite Isolierung (42) zumindest bereichsweise von mindestens einer weiteren Isolierung umgeben ist, die einen höheren Porenanteil als die zweite Isolierung (42) aufweist.

7. Gasmessfühler mit einer Heizeinrichtung nach einem der vorherigen Ansprüche, **dadurch gekennzeichnet, dass** die Heizeinrichtung (40) innerhalb eines planaren, schichtförmig aufgebauten, in dem Gasmessfühler angeordneten Sensorelements zwischen einer Festelektrolytschicht (23) und einer weiteren Festelektrolytschicht (24) angeordnet ist.

8. Gasmessfühler nach Anspruch 7 **dadurch gekennzeichnet, dass** die Heizeinrichtung (40) seitlich von einem Dichtrahmen (45) aus ionenleitendem Material umgeben ist.

9. Heizeinrichtung nach Anspruch 1, **dadurch gekennzeichnet, dass** die zweite Isolierung (42) zumindest bereichsweise von mindestens einer weiteren Isolierung umgeben ist.

## Claims

1. Heating device for a gas-measuring sensor, in particular for use in the exhaust-gas analysis of internal combustion engines, with a heating element which has an electrical resistance layer and which is electrically insulated, the heating element (43) being embedded into a first insulation (41) which is itself surrounded at least in regions by a second insulation (42), **characterized in that** the first insulation (41) and the second insulation (42) have Al₂O₃, and **in that** the first insulation (41) has a higher pore fraction than the second insulation (42).

2. Heating device according to Claim 1, **characterized in that** the first insulation (41) has open porosity.

3. Heating device according to Claim 1, **characterized in that** the second insulation (42) has closed porosity.

4. Heating device according to Claim 1, **characterized in that** the first insulation (41) has in the sintered state a pore fraction of 5 to 16% by volume, preferably 8% by volume.

5. Heating device according to Claim 1, **characterized in that** the second insulation (42) has in the sintered state a pore fraction of 1.5 to 5% by volume, preferably 3% by volume.

6. Heating device according to Claim 2, **characterized in that** the second insulation (42) is surrounded at least in regions by at least one further insulation which has a higher pore fraction than the second insulation (42).

7. Gas-measuring sensor having a heating device according to one of the preceding claims, **characterized in that** the heating device (40) is arranged within a planar sensor element constructed in layer form and arranged in the gas-measuring sensor, between a solid electrolyte layer (23) and a further solid electrolyte layer (24).

8. Gas-measuring sensor according to Claim 7, **characterized in that** the heating device (40) is surrounded laterally by a sealing frame (45) consisting of ion-conducting material.

9. Heating device according to Claim 1, **characterized in that** the second insulation (42) is surrounded at least in regions by at least one further insulation.

## Revendications

1. Dispositif de chauffage pour une sonde de mesure de gaz destinée en particulier à être utilisée dans l'analyse des gaz d'échappement de moteurs à combustion interne, et qui présente un élément chauffant doté d'une couche de résistance électrique et électriquement isolé, l'élément chauffant (43) étant incorporé dans une première isolation (41) qui elle-même est entourée au moins en partie par une deuxième isolation (42), **caractérisé en ce que**
la première isolation (41) et la deuxième isolation (42) présentent de l'Al₂O₃ et
**en ce que** la première isolation (41) présente une plus grande teneur en pores que la deuxième isolation (42).

2. Dispositif de chauffage selon la revendication 1, **caractérisé en ce que** la première isolation (41) présente une porosité ouverte.

3. Dispositif de chauffage selon la revendication 1, **caractérisé en ce que** la deuxième isolation (42) présente une porosité fermée.

4. Dispositif de chauffage selon la revendication 1, **caractérisé en ce que** la première isolation (41) présente à l'état fritté une teneur en pores de 5 à 16 % en volume et de préférence de 8 % en volume.

5. Dispositif de chauffage selon la revendication 1, **caractérisé en ce que** la deuxième isolation (42) présente à l'état fritté une teneur en pores de 1,5 à 5 % en volume et de préférence de 3 % en volume.

6. Dispositif de chauffage selon la revendication 2, **caractérisé en ce que** la deuxième isolation (42) est entourée au moins en partie par au moins une autre isolation dont la teneur en pores est plus élevée que celle de la deuxième isolation (42).

7. Sonde de mesure de gaz doté d'un dispositif de chauffage selon l'une des revendications précédentes, **caractérisée en ce que** le dispositif de chauffage (40) est disposé à l'intérieur d'un élément de détecteur plan, à structure stratifiée, disposé dans la sonde de mesure de gaz entre une couche (23) d'électrolyte solide et une autre couche (24) d'électrolyte solide.

8. Sonde de mesure de gaz selon la revendication 7, **caractérisée en ce que** le dispositif de chauffage (40) est entouré latéralement par un cadre d'étanchéité (45) constitué d'un matériau conducteur d'ions.

9. Dispositif de chauffage selon la revendication 1, **caractérisé en ce que** la deuxième isolation (42) est entourée au moins en partie par au moins une autre isolation.
